# EUROPEAN PATENT SPECIFICATION

(11) **EP 1 384 010 B1**
(45) Date of publication and mention of the grant of the patent: **21.07.2004**
(21) Application number: 01949900.3
(22) Date of filing: 28.06.2001
(51) Int. Cl.: F16D 65/12

(54) **COMPOSITE DISC FOR A DISC BRAKE**
SCHEIBE AUS VERBUNDWERKSTOFF FÜR EINE SCHEIBENBREMSE
DISQUE COMPOSITE POUR FREINS A DISQUE

(43) Date of publication of application: 28.01.2004
(73) Proprietor: Freni Brembo S.p.A., 24035 Curno, Bergamo (IT)
(72) Inventor: GOTTI, Giovanni, I-24036 Almé (IT); TIRONI, Giovanni, Mario, I-24044 Dalmine (IT)
(74) Representative: Crippa, Paolo Ernesto
(86) International application number: PCT/IT2001/000346
(87) International publication number: WO 2003/002886

(56) References cited:
- EP-A- 1 091 137
- DE-A- 1 775 685
- DE-A- 1 800 161
- DE-U- 9 319 491
- US-A- 3 933 228

## Description

The present invention relates to a composite disc for a disc brake, of the type in which an annular braking band is coupled firmly to a bell or hub, as defined in the preamble to Claim 1.

Composite disc-brake discs of the type indicated above, which are particularly suitable for use on heavy vehicles such as, for example, commercial vehicles, agricultural vehicles, and railway carriages, are known; in these discs, the braking band is formed in two separate, complementary portions which are connected to one another releasably to enable the band to be replaced when the braking surfaces are worn out, without the need to demount the bearing unit from the stub axle of the wheel.

According to the prior art, the hub and the braking band are connected to one another by a splined connection which provides for engagement between radial protuberances projecting from the outer periphery of the hub and corresponding radial protuberances projecting internally from the band.

For a better understanding of the state of the art on the subject in question and of the problems inherent therein, an example of a composite disc-brake disc provided with a braking band which can be split into two portions, as described in German patent application DE 198 39 763 will be described first of all.

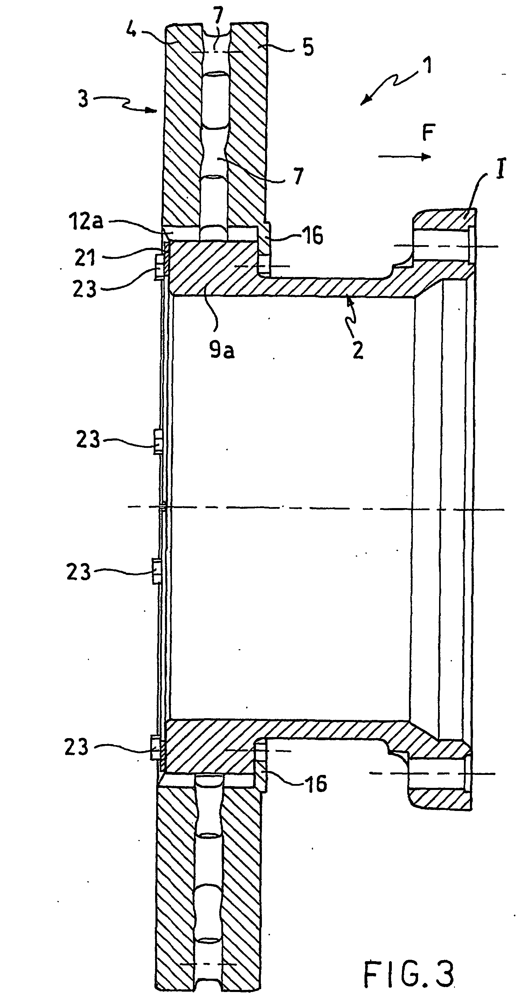

In the description and in the appended claims, terms such as "axial, "radial" and "tangential" are intended to refer to the condition of mounting on the vehicle or, preferably, to the axis of symmetry and/or of rotation of the disc. Similarly, terms such as "internal" and "external" are intended to refer to the condition of mounting on the vehicle and/or, preferably, the term "outer" is intended to refer to the portion, side or face of the disc or of the braking band which faces the axial extension of the bell or hub which is connected to the stub axle of the suspension (indicated "I" in Figure 3) and "inner" is intended to refer to the opposite portion, side or face of the disc or of the braking band.

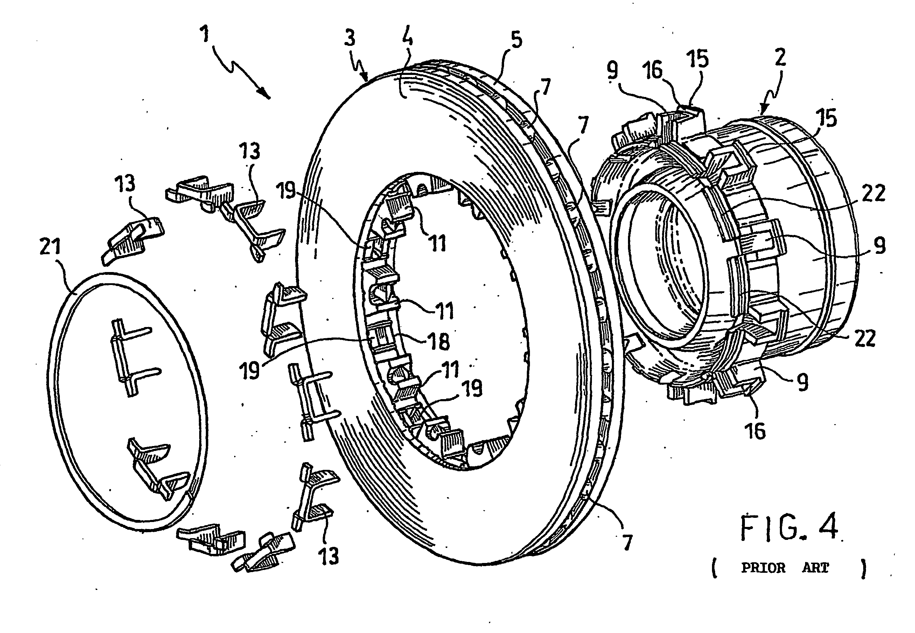

With reference to Figure 4 of the appended drawings, which is taken from the above-mentioned German document, a composite disc-brake disc 1 comprises a hub 2 and an annular braking band 3 formed in a single piece or in several portions, with two plates 4 and 5 connected to one another by axial connecting elements or projections 7 of various radial extents, defining substantially radial internal ducts through which air can flow to ventilate the disc. The hub 2 and the band 3 are coupled by engagement between a plurality of radial protuberances 9 projecting from the outer periphery of the hub and a corresponding plurality of radial protuberances 11 projecting internally from the band. The protuberances 9 and 11 are shaped in a manner such as to define between them a plurality of recesses which are distributed uniformly around the coupling circumference and in which intermediate U-shaped elements 13, by means of which torque is transmitted from the band 3 to the hub 2, are fitted. To ensure the axial connection or restraint of the band relative to the hub, each protuberance 9 of the hub has., on its axially outer side (that is, towards the right as seen in Figure 4), a radial shoulder 15 which can define a radial or vertical axial restraint 16. A corresponding vertical surface 18 of a respective step-like projection 19 present in the recess between two consecutive protuberances 11 of the band is arranged in abutment with this surface. Axial restraint is ensured on the opposite side, on the other hand, by a resilient ring 21 fitted in an annular seat 22 on the outer periphery of the hub.

The object of the present invention is to provide a composite disc-brake disc of the type in which the braking band is coupled to the hub by engagement between a plurality of radial protuberances on the hub and on the band, which is improved in comparison with the prior art discussed above.

This object is achieved in full, according to the invention, by virtue of the fact that the braking band has a plurality of axial shoulders which project radially from its inner circumference, and each of which can provide an axial abutment surface for the corresponding radial protuberance of the hub, as defined in independent Claim 1.

A preferred but non-limiting embodiment of the present invention will be described below; in particular, its elements and characteristics which differentiate it from the prior art are described with reference to the appended drawings, in which:
Figure 1a is a front view of a composite disc-brake disc having a braking band in two portions, sectioned in the transverse median plane of the disc,
Figure 1b is a front view of a composite braking band for a disc brake according to a further, one-piece embodiment, sectioned in the transverse median plane of the disc,
Figure 2 is a side view of the disc of Figure 1, sectioned along a first diametral line II-II,
Figure 3 is a side view of the disc of Figure 1, sectioned along a second diametral line III-III, and
Figure 4 is an exploded, perspective view of a composite disc-brake disc according to the prior art.

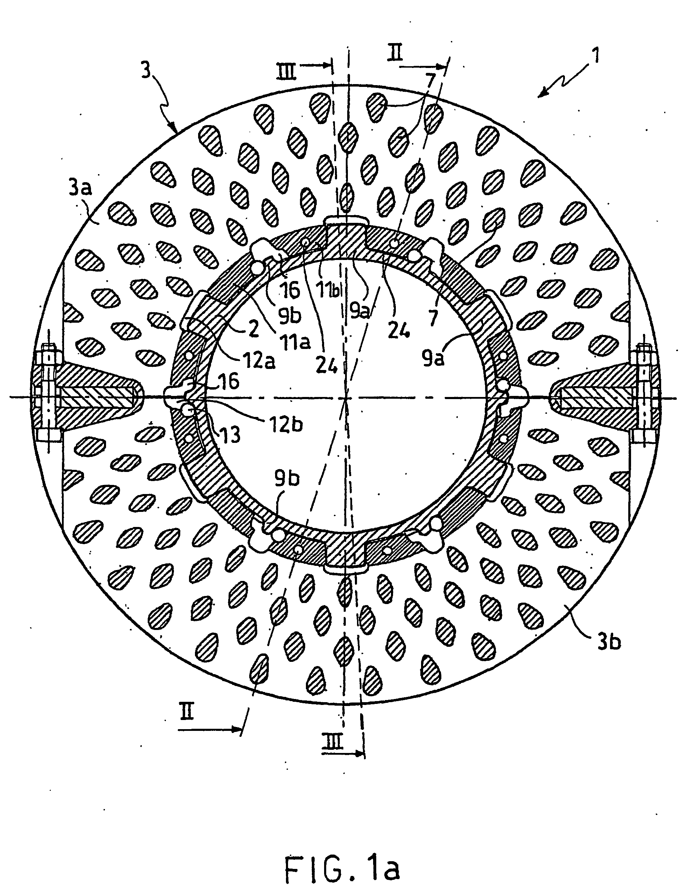

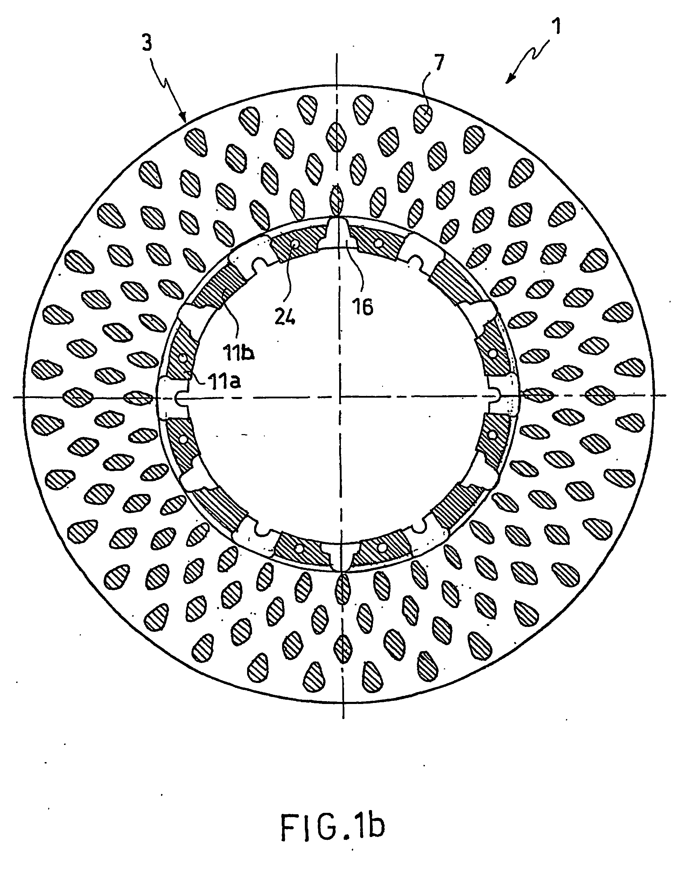

As shown in Figures 1a to 3, in which parts and elements identical or corresponding to those of Figure 4 (prior art) have been attributed the same reference numerals, a composite disc 1 according to the present invention comprises a hub 2 and an annular braking band 3, for example, formed in two complementary and separable portions 3a and 3b (Figure 1a), or in a single piece (Figure 1b), and having two plates or elements 4 and 5 connected to one another by axial connecting elements or projections 7 defining ducts through which air can flow to ventilate the disc.

The outer periphery of the bell or hub 2 has a plurality of radial protuberances of two types, indicated 9a and 9b, respectively, arranged alternately and spaced apart uniformly circumferentially. The protuberances 9a have the shape of teeth with substantially straight sides, whereas the protuberances 9b, which have smaller dimensions than the protuberances 9a in terms of both height and width, have sides which are slightly arcuate with concave profiles.

A corresponding plurality of two by two identical pairs of inwardly-projecting radial protuberances 11a, 11b, also spaced apart uniformly circumferentially, is formed on the inner circumference of the braking band 3. Respective first recesses 12a are defined between consecutive pairs of protuberances 11a, 11b and have a shape and size such as to house corresponding protuberances 9a of the hub with minimal clearance. The hub and the braking band of the disc are thus coupled for rotation together by virtue of the engagement between the sides of each radial protuberance 9a of the hub with the corresponding sides of the radial protuberances 11a, 11b of the band defining the recess 12a in which the protuberance 9a is housed.

Each pair of radial protuberances 11a, 11b on the braking band 3 defines a second recess 12b of a shape and size such as to house a respective protuberance 9b of the hub and a respective intermediate element 13, such as a resilient pin. Each resilient pin is fitted in a suitable seat formed in the side of the radial protuberance 11a facing the recess 12b so as to be interposed between the protuberances 11a and 9b. The use of these resilient elements enables the tangential clearance between the protuberances of the hub and of the band to be taken up, to eliminate impacts between the sides of the protuberances upon a change from an "idle" operating condition, in which no braking action is exerted on the band, to an "active" operating condition in which the band transmits a braking torque to the hub as a result of the operation of the brakes.

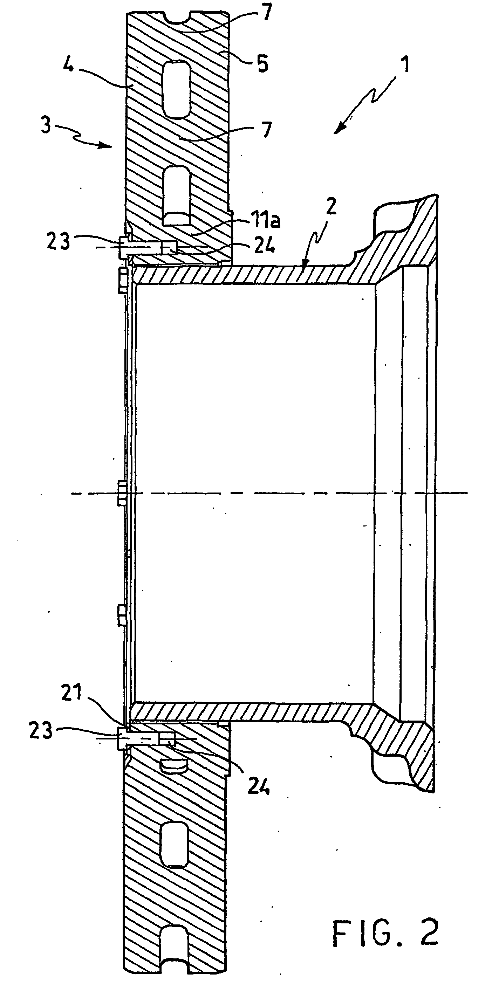

With reference to Figure 2, the radial protuberances 11a and 11b of the braking band 3 preferably have an axial dimension substantially equal to that of the band itself and, in particular, are connected to both of the plates 4 and 5 in a manner such as to distribute the torque transmitted between the band and the hub substantially equally onto the plates 4 and 5, preventing involvement of the axial connecting elements or projections 7.

As shown in Figure 3, in order to cooperate in the axial connection or restraint of the braking band 3 relative to the hub 2, at the axially outer ends of the recesses 12a and 12b disposed between the radial protuberances of the band 3, the plate 5 has shoulders 15 which project radially inwards and have respective axial abutment surfaces 16 for axially outer faces 18 of the radial protuberances 9a and 9b of the hub 2. The braking band 3 is thus allowed to slip off axially solely outwards, that is, in the direction indicated by the arrow F.

On the axially opposite side, on the other hand, the braking band 3 is restrained axially on the hub 2 by a ring 21 which is fixed to the axially inner faces of the radial protuberances 11a and 11b of the band, advantageously by means of a plurality of screws 23 fitted in a corresponding plurality of threaded holes 24. The ring 21 is provided both for braking bands which can be split and for one-piece braking bands.

A composite disc-brake disc according to the invention clearly offers a series of advantages over discs of known construction, as will be explained below. First of all, the fact that the radial shoulders 15 defining the axial abutment surfaces 16 have an arrangement and shape such as to allow the braking band 3 to slip off the hub in an axially outward direction, prevents problems of interference with the stub axle of the vehicle wheel during the replacement of the band, both during the removal of worn band portions 3a and 3b and during the mounting of replacement band portions.

Moreover, by virtue of the fact that the shoulders 15 are formed in the recesses 12a and 12b disposed between the radial protuberances 11a and 11b of the braking band 3 rather than on the radial protuberances 9 of the hub 2, as is proposed in the prior-art document discussed above, it is possible to form these shoulders within the same cycle of machining by milling which is required to produce the radial protuberances 11a and 11b and the recesses 12a and 12b of the band 3. In comparison with known solutions, long and complex cycles of turning operations after the milling of the seats for the geometrical coupling of the band and the hub are thus avoided. The machining of the components of the disc is thus considerably simplified, with a consequent reduction in manufacturing costs, and the quality of the finished product is also improved, since all of the machining operations on the band which relate to the radial protuberances 11a and 11b of the band are performed on the same machine tool and with the same positioning, thus avoiding geometrical errors connected with a change of machine and with repositioning of the pieces.

A further advantage offered by the present invention is that the presence of the shoulders 15 on the braking band 3 rather than on the hub 2 ensures that, during the replacement of the band, the axial abutment surfaces 16 are clean and can thus ensure accuracy of the coupling with the corresponding faces of the radial protuberances 9a and 9b of the hub. In contrast, according to the solution proposed in the above-mentioned German patent application, since the shoulders 15 are associated with the hub 2, they are not replaced by new shoulders when the band of the disc is replaced. Moreover, since they are disposed towards the outside of the vehicle, these shoulders are particularly subject to accumulation of dirt and, moreover, access to them for cleaning is difficult, given that the axial abutment surfaces 16 face inwards relative to the vehicle.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A composite disc-brake disc, particularly for heavy vehicles, of the type in which a hub (2) is arranged to accept and to restrain an annular braking band (3) comprising two plates (4, 5) connected rigidly to one another by axial elements (7), the hub (2) having, on its outer circumference, a plurality of radial protuberances (9a, 9b), the band (3) having, on its inner circumference, a corresponding plurality of radial protuberances (11a, 11b) for engaging the radial protuberances (9a, 9b) of the hub, and radial shoulders (15) with radial abutment surfaces (16) being provided for restraining the band (3) axially on the hub (2) on one side,
**characterized in that** the shoulders (15) are on the braking band (3).

2. A disc according to Claim 1 in which the shoulders (15) for the axial restraint of the braking band (3) on the hub (2) are formed on the inner circumference of one (5) of the plates (4, 5) of the band (3).

3. A disc according to Claim 2 in which the shoulders (15) are formed on that plate of the braking band (3) which, considered when the disc is mounted on the vehicle, is the axially outer plate (5).

4. A disc according to Claim 3 in which each shoulder (15) has a radial surface (16) which faces axially inwards relative to the disc and which can prevent the braking band (3) from slipping off the hub (2) axially in this direction.

5. A disc according to Claim 4 in which the shoulders (15) are housed in recesses (12a, 12b) disposed between the radial protuberances (11a, 11b) of the braking band (3) in a manner such that the axial restraint surfaces (16) are arranged in abutment with the axially outer faces of the radial protuberances (9a, 9b) of the hub (2).

6. A disc according to any one of the preceding claims in which the radial protuberances (11a, 11b) on the braking band (3) are connected to both of the plates (4, 5) of the band (3) in a manner such that the braking torque transmitted by the band (3) to the hub (2) is distributed onto the plates to a substantially equal extent.

7. A disc according to Claim 6 in which the radial protuberances (11a, 11b) have an axial dimension substantially equal to that of the braking band (3).

8. A disc according to any one of the preceding claims, of the type also comprising a ring (21) for locking the braking band (3) on the hub (2) axially on the opposite side to the shoulders (15), in which the ring (21) is fixed to the radial protuberances (11a, 11b) of the braking band (3) by threaded connecting members (23, 24).

9. A disc according to any one of the preceding claims in which the braking band (3) has a plurality of pairs of first and second radial protuberances (11a, 11b) arranged uniformly circumferentially so as to define first and second recesses (12a, 12b) between the pairs of first and second protuberances and between the first and second protuberances, respectively, and in that the hub (2) has a corresponding plurality of first radial protuberances (9a) of a shape and size such as to be housed with minimal tangential clearance in the first recesses (12a) in order to couple the band (3) for rotation with the hub (2).

10. A disc according to Claim 9 in which the hub (2) also has a plurality of second radial protuberances (9b) of a shape and size such as to be housed with tangential clearance in the second recesses (12b) to permit the interposition of resilient elements (13) between the protuberances (9b) and the second recesses (12b) so as to take up the tangential clearance of the coupling between the braking band (3) and the hub (2) and to prevent any impacts between the sides of the first radial protuberances (9a) of the hub (2) and the sides of the respective first recesses (12a) defined between consecutive pairs of radial protuberances (11a, 11b) of the band (3).

11. A braking band for a composite disc-brake disc (1) according to any one of the preceding claims.

12. A braking band according to Claim 11 in which the band can be split into at least two complementary portions (3a, 3b).

## Patentansprüche

1. Verbundscheibe für eine Scheibenbremse, insbesondere für Schwerfahrzeuge, der Art, bei der eine Nabe (2) für das Aufnehmen und das Zurückhalten eines ringförmigen Bremsbandes (3) ausgebildet ist, das zwei Platten (4, 5) aufweist, die durch axiale Elemente (7) steif miteinander verbunden sind, wobei die Nabe (2) an ihrem Außenumfang eine Mehrzahl von radialen Vorsprüngen (9a, 9b) aufweist und das Band (3) an seinem Innenumfang mit einer entsprechenden Anzahl von radialen Vorsprüngen (11a, 11b) für den Eingriff mit den radialen Vorsprüngen (9a, 9b) der Nabe versehen ist sowie axial an der Nabe (2) an einer Seite radiale Schultern (15) mit radialen Auflageoberflächen (16) zum Zurückhalten des Bandes (3) vorgesehen sind,
**dadurch gekennzeichnet, dass** sich die Schultern (15) an dem Bremsband (3) befinden.

2. Scheibe nach Anspruch 1, bei der die Schultern (15) für das axiale Zurückhalten des Bremsbandes (3) auf der Nabe (2) an dem Innenumfang einer (5) der Platten (4, 5) des Bandes (3) ausgebildet sind.

3. Scheibe nach Anspruch 2, bei der die Schultern (15) an derjenigen Platte des Bremsbandes (3) ausgebildet sind, welche die axial äußere Platte (5) ist, wenn die Scheibe an dem Fahrzeug montiert ist.

4. Scheibe nach Anspruch 3, bei der jede Schulter (15) eine radiale Oberfläche (16) aufweist, die bezüglich der Scheibe axial nach innen gewandt ist und das Bremsband (3) daran hindern kann, axial in dieser Richtung von der Nabe abzugleiten.

5. Scheibe nach Anspruch 4, bei der die Schultern (15) in Ausnehmungen (12a, 12b) aufgenommen sind, die zwischen den radialen Vorsprüngen (11a, 11b) des Bremsbandes (3) in einer solchen Weise angeordnet sind, dass die axialen Rückhalteoberflächen (16) sich im Anschlag mit den axialen Außenseiten der radialen Vorsprünge (9a, 9b) der Nabe (2) befinden.

6. Scheibe nach einem der vorstehenden Ansprüche, bei der die radialen Vorsprünge (11a, 11b) an dem Bremsband (3) mit beiden Platten (4, 5) des Bandes (3) in einer solchen Weise verbunden sind, dass das Bremsmoment, welches durch das Band (3) auf die Nabe (2) übertragen wird, in einem im Wesentlichen gleichen Ausmaß auf die Platten verteilt wird.

7. Scheibe nach Anspruch 6, bei der die radialen Vorsprünge (11a, 11b) eine axiale Abmessung aufweisen, die im Wesentlichen gleich der Abmessung des Bremsbandes (3) ist.

8. Scheibe nach einem der vorstehenden Ansprüche, der Art, dass sie auch einen Ring (21) zum axialen Verriegeln des Bremsbandes (3) auf der Nabe (2) an der gegenüber liegenden Seite der Schultern (15) aufweist, wobei der Ring (21) durch mit einem Gewinde versehene Verbindungselemente (23, 24) an den radialen Vorsprüngen (11a, 11b) des Bremsbandes (3) befestigt ist.

9. Scheibe nach einem der vorstehenden Ansprüche, bei der das Bremsband (3) mehrere Paare aus einem ersten und einem zweiten radialen Vorsprung (11a, 11b) aufweist, die über den Umfang gleichmäßig angeordnet sind, so dass zwischen den Paaren aus dem ersten und dem zweiten Vorsprung bzw. zwischen dem ersten und dem zweiten Vorsprung erste und zweite Vorsprünge (12a, 12b) gebildet werden, wobei die Nabe (2) eine entsprechende Mehrzahl von ersten radialen Vorsprüngen (9a) mit einer solchen Gestalt und einer solchen Größe aufweist, dass sie mit einem minimalen tangentialen Spiel in den ersten Ausnehmungen (12a) aufgenommen werden, um das Band (3) für eine Rotation mit der Nabe (2) zu koppeln.

10. Scheibe nach Anspruch 9, bei der die Nabe (2) auch eine Mehrzahl von zweiten radialen Vorsprüngen (9b) mit einer solchen Gestalt und einer solchen Größe aufweist, dass sie mit einem tangentialen Spiel in den zweiten Ausnehmungen (12b) aufgenommen werden, um das Einsetzen von elastischen Elementen (13) zwischen den Vorsprüngen (9b) und den zweiten Ausnehmungen (12b) zu erlauben, damit das tangentiale Spiel der Kopplung zwischen dem Bremsband (3) und der Nabe (2) aufgenommen wird und jeder Stoß zwischen den Seiten der ersten radialen Vorsprünge (9a) der Nabe (2) und den Seiten der entsprechenden ersten Ausnehmungen (12a), die zwischen aufeinander folgenden Paaren von radialen Vorsprüngen (11a, 11b) des Bandes (3) vorliegen, verhindert wird.

11. Bremsband für eine Verbundscheibe (1) für eine Scheibenbremse nach einem der vorstehenden Ansprüche.

12. Bremsband nach Anspruch 11, bei dem das Band in mindestens zwei komplementäre Abschnitte (3a, 3b) aufgeteilt werden kann.

## Revendications

1. Disque composite pour frein à disque, en particulier pour des véhicules lourds, du type dans lequel un moyeu (2) est agencé de façon à recevoir et retenir une couronne annulaire de freinage (3) comportant deux plaques (4, 5) reliées rigidement l'une à l'autre par des éléments axiaux (7), le moyeu (2) ayant, sur sa circonférence extérieure, une pluralité de protubérances radiales (9a, 9b), la couronne (3) ayant, sur sa circonférence intérieure, une pluralité correspondante de protubérances radiales (11a, 11b) destinées à engager les protubérances radiales (9a, 9b) du moyeu, et des épaulements radiaux (15) présentant des surfaces radiales (16) d'appui étant prévus pour retenir la couronne (3) axialement sur le moyeu (2) sur un côté,
**caractérisé en ce que** les épaulements (15) sont situés sur la couronne (3) de freinage.

2. Disque selon la revendication 1, dans lequel les épaulements (15) destinés à retenir axialement la couronne (3) de freinage sur le moyeu (2) sont formés sur la circonférence intérieure de l'une (5) des plaques (4, 5) de la couronne (3).

3. Disque selon la revendication 2, dans lequel les épaulements (15) sont formés sur la plaque de la couronne (3) de freinage qui, considérée lorsque le disque est monté sur le véhicule, est la plaque axialement extérieure (5).

4. Disque selon la revendication 3, dans lequel chaque épaulement (15) présente une surface radiale (16) qui est tournée axialement vers l'intérieur par rapport au disque et qui peut empêcher la couronne (3) de freinage de se dégager en glissant axialement du moyeu (2) dans cette direction.

5. Disque selon la revendication 4, dans lequel les épaulements (15) sont logés dans des évidements (12a, 12b) disposés entre les protubérances radiales (11a, 11b) de la couronne (3) de freinage d'une manière telle que les surfaces axiales (16) de retenue sont agencées en appui contre les faces axialement extérieures des protubérances radiales (9a, 9b) du moyeu (2).

6. Disque selon l'une quelconque des revendications précédentes, dans lequel les protubérances radiales (11a, 11b) sur la couronne (3) de freinage sont reliées aux deux plaques (4, 5) de la couronne (3) d'une manière telle que le couple de freinage transmis par la couronne (3) au moyeu (2) est réparti sur les plaques à un degré sensiblement égal.

7. Disque selon la revendication 6, dans lequel les protubérances radiales (11a, 11b) ont une dimension axiale sensiblement égale à celle de la couronne (3) de freinage.

8. Disque selon l'une quelconque des revendications précédentes, du type comportant aussi un anneau (21) destiné à bloquer la couronne (3) de freinage sur le moyeu (2) axialement sur le côté opposé à celui des épaulements (15), dans lequel l'anneau (21) est fixé aux protubérances radiales (11a, 11b) de la couronne (3) de freinage par des éléments filetés (23, 24) de liaison.

9. Disque selon l'une quelconque des revendications précédentes, dans lequel la couronne (3) de freinage comporte une pluralité de paires de première et seconde protubérances radiales (11a, 11b) agencées uniformément circonférentiellement afin de définir des premier et second évidements (12a, 12b) entre les paires de première et seconde protubérances et entre les première et seconde protubérances, respectivement, et en ce que le moyeu (2) comporte une pluralité correspondante de premières protubérances radiales (9a) d'une forme et d'une dimension telles qu'elles sont logées avec un jeu tangentiel minimal dans les premiers évidements (12a) afin d'accoupler en rotation la couronne (3) au moyeu (2).

10. Disque selon la revendication 9, dans lequel le moyeu (2) comporte également une pluralité de secondes protubérances radiales (9b) d'une forme et d'une dimension telles qu'elles sont logées avec un jeu tangentiel dans les seconds évidements (12b) afin de permettre l'interposition d'éléments élastiques (13) entre les protubérances (9b) et les seconds évidements (12b) pour rattraper le jeu tangentiel de l'accouplement entre la couronne de freinage (3) et le moyeu (2) et pour éviter tout impact entre les côtés des premières protubérances radiales (9a) du moyeu (2) et les côtés des premiers évidements respectifs (12a) définis entre des paires consécutives de protubérances radiales (11a, 11b) de la couronne (3).

11. Couronne de freinage pour un disque composite (1) pour frein à disque selon l'une quelconque des revendications précédentes.

12. Couronne de freinage selon la revendication 11, dans laquelle la couronne peut être divisée en au moins deux parties complémentaires (3a, 3b).
